Europäisches Patentamt

European Patent Office

Office européen des brevets

(19)

(11) Veröffentlichungsnummer: **0 094 511**
**A2**

(12) ## EUROPÄISCHE PATENTANMELDUNG

(21) Anmeldenummer: 83103737.9

(22) Anmeldetag: 18.04.83

(51) Int. Cl.³: **H 01 J 7/18**
F 17 C 3/00, F 17 C 13/00

(30) Priorität: 18.05.82 DE 3218625

(43) Veröffentlichungstag der Anmeldung:
23.11.83 Patentblatt 83/47

(84) Benannte Vertragsstaaten:
AT CH FR GB LI NL SE

(71) Anmelder: MESSER GRIESHEIM GMBH
Patentabteilung Hanauer Landstrasse 330
D-6000 Frankfurt/Main 1(DE)

(72) Erfinder: Stoepler, Walter
Anglerstrasse 68
D-6112 Gross Zimmern(DE)

(72) Erfinder: Unger, Klaus
Am Altenberg 40
D-6104 Seeheim-Jugenheim 1(DE)

(54) Getter aus aktiven, feindispersen Metallen.

(57) In Vakuumsystemen, z.B. im evakuierten Zwischenraum doppelwandiger Behälter zur Aufbewahrung tiefsiedender verflüssigter Gase, werden Getter verwendet. Ihre Aufgabe ist es, in das Vakuumsystem eindringende Gase aufzunehmen und dadurch das Vakuum aufrechtzuerhalten. Bei den Gettersubstanzen handelt es sich zumeist um aktivierte Metalle. Diese metalle können mit Sauerstoff unter starker Wärmeentwicklung bis zur Selbstentzündung reagieren. Bei unvorsichtiger Handhabung stellen derartige Getter daher eine Gefährdung dar. Zwecks Ausschaltung dieser Gefährdung werden die Getter aus feindispersen Metallen mit festen, feinteiligen Hilfsstoffen gemischt, beispielsweise keramischen Materialien oder Adsorbentien. Der Metallgehalt der Mischung beträgt vorzugsweise 1 bis 40%. Dis Mischung kann durch Agglomeration geformt und durch thermische Behandlung verfestigt werden. Die aktiven Metalle werden somit verdünnt und ihr pyrophores Verhalten beseitigt.

EP 0 094 511 A2

– 1 –

MESSER GRIESHEIM GMBH                     MG 1390

Kennwort:  Nichtpyrophorer Getter         EM 1032

Erfinder:  Dipl.-Chem.W.Stoepler          Ordner: E
           Prof.Dr.K.Unger


## Getter aus aktiven, feindispersen Metallen

Die Erfindung betrifft einen Getter aus aktiven, feindispersen Metallen, sowie ein Verfahren zu seiner Herstellung.

Getter sind Festkörper, die in verschlossenen Behältern
wie Radioröhren, Kryobehältern für Flüssiggase, eindringende Gase chemisorbieren, physisorbieren, oder
chemisorbieren und physisorbieren, d.h. gettern und somit das Vakuum für eine bestimmte Dauer aufrechterhalten.
Bei den Gettersubstanzen handelt es sich meist um aktive
Metalle bzw. Legierungen wie Barium, Magnesium, Titan,
Zirkonium, Tantal und Thorium. Ein wichtiger Getter für
Glühlampen ist roter Phosphor. Der Gettervorgang gegenüber Gasen wie Sauerstoff, Stickstoff, Wasserstoff, kann
bestehen in einer Chemisorption, d.h. einer chemischen Reaktion des Gases an der Metalloberfläche, z.B. in einer Oxidbildung. Eine weitere Möglichkeit ist die Physisorption, d.h. eine Anreicherung des Gases an der Metalloberfläche, ohne daß eine chemische Bindung zwischen Gas und Metalloberfläche erfolgt. Zur Physisorption ist eine hohe Oberfläche von über 10 m²/g notwendig. Aus diesem Grunde werden Getter in feinteiliger Form eingesetzt. Schließlich kann der Gettervorgang in einer Absorption bestehen, d.h. einem Inlösunggehen des Gases, beispielsweise Wasserstoff im Metall.

Alle drei Vorgänge können gleichzeitig stattfinden, d.h. zum Gettern beitragen. Allerdings besitzen die drei Vorgänge eine unterschiedliche Temperaturabhängigkeit, so daß ein Phänomen in einem bestimmten Temperaturbereich dominieren kann. Alle drei Vorgänge sind reversibel mit Einschränkung der Chemisorption. Das bedeutet, daß bei Anwendung genügend hoher Temperaturen der beladene Getter die Gase durch Desorption wieder abgibt und damit wieder aktiv wird. Für den Einsatz eines Getters sind zwei Größen bestimmend, nämlich die Beladungskapazität B (Mole Gas/g Getter) und die Sorptionsgeschwindigkeit S (Liter Gas/s (oder h,d)), S berechnet sich nach $S=\frac{Q}{P}$, wobei Q die Leckrate in mbar Liter/s und P der Gleichgewichtsdruck in mbar ist.

Derartige Getterpräparationen sind für doppelwandige wärmeisolierte Flüssiggasbehälter beispielsweise beschrieben worden in der DE-AS 1 134 398 und der DE-AS 1 253 735.

Die Zielsetzung war, neben konstruktiven Aspekten, einen aktiven Getter mit möglichst hoher Oberfläche zu erhalten. Bei allen bisherigen Arbeiten über Getter für Flüssiggasbehälter wird jedoch ein Aspekt völlig außer acht gelassen, nämlich der, daß aktive Metalle pyrophore Eigenschaften besitzen und bei genügendem Zutritt von Luft oder reinem Sauerstoff Wärme entwickeln und zur Druckerhöhung im Vakuumraum führen. Diese Wärmeentwicklung kann unter Glimmen und Sprühen von Funken vor sich gehen. Beispielsweise ist beim Zirkon diese leichte Entzündbarkeit bekannt und beschrieben.

Dieses pyrophore Verhalten von aktiven Metallen, die als Getter in Flüssiggasbehältern eingesetzt werden, stellt somit eine Gefährdung dar. Dasselbe gilt natürlich auch für die Herstellung, den Transport und die Lagerung solcher Getter, bevor sie überhaupt in die Behälter eingebaut werden.

Getter aus Metallen wie Titan, Zirkon, Tantal, Thorium, Uran, Wolfram, Molybdän sind entweder pulverförmig im Handel oder werden durch entsprechende Verfahren in eine bestimmte Form wie Tabletten, Stäbchen, dünne Lamellen, Scheiben oder Drähte gebracht. Nach dem Aktivieren bei höheren Temperaturen ist der Getter einsatzbereit.

Die/
/Sorptionsgeschwindigkeit bleibt zunächt konstant und nimmt dann bei längerer Dauer stark ab. Die genannten Getter arbeiten im allgemeinen bei höheren Temperaturen (T > 400° C). Sie werden jedoch auch bei tieferen Temperaturen eingesetzt, z.B. in vakuumisolierten Speicherbehältern für tiefsiedende verflüssigte Gase. Bei plötzlichem Zutritt von Luft oder reinem Sauerstoff, z.B. infolge eines Lecks, setzt eine heftige Reaktion mit dem noch aktiven Getter ein. Damit ist vor allem bei Flüssiggasbehältern die Gefahr eines Druckanstieges gegeben.

Der Erfindung liegt daher die Aufgabe zugrunde, einen Getter aus aktiven feindispersen Metallen zu schaffen, der nicht pyrophor ist.

Gemäß der Erfindung wird dies dadurch erreicht, daß die Metalle mit festen, feinteiligen Hilfsstoffen gemischt sind.

Das Prinzip der Erfindung besteht also in einer gezielten Verdünnung des aktiven Gettermaterials derart, daß im Endprodukt die Getterteilchen homogen in der Matrix des Hilfsstoffes verteilt sind.

Um eine Entmischung zu verhindern, ist es zweckmäßig, das Gemisch aus Metall und Hilfsstoff durch Agglomeration zu formen und durch thermische Behandlung zu verfestigen.

Der Hilfsstoff kann aus oxidischen, porösen, nichtoxidischen und nichtporösen Materialien bestehen, z.B. Aluminiumoxid, Zeolithpulver, Kieselgel, sowie Carbide und Nitride von Metallen wie beispielsweise Silizium und Titan. Die geeignete Teilchengröße beträgt 0,1 bis 100 µm, vorzugsweise 10 bis 60µm. Der geeignete Metallgehalt ist 1 bis 40 Gew.%, vorzugsweise 5 bis 10 Gew.%.

Der wesentliche Vorteil des erfindungsgemäßen Getters besteht darin, daß er gegenüber Luft bzw. Sauerstoff kein pyrophores Verhalten besitzt. Die Beladungskapazität wird nicht beeinträchtigt. Ein zusätzlicher Vorteil besteht darin, daß die Sorptionsgeschwindigkeit durch die Porenweite des Getters und durch die Geometrie der Getterformlinge kontrolliert und eingestellt werden kann. Es kann auch ein Kombinationseffekt erreicht werden derart, daß die Getterkomponente, d.h. das Metall, Gase wie Sauerstoff, Stickstoff, Wasserstoff gettert, der Hilfsstoff, z.B. das poröse Oxid, polare Gase und Dämpfe wie z.B. Wasser adsorbiert. Da die Sorptionsgeschwindigkeit kontrolliert und eingestellt werden kann, läßt sich die Langzeitwirkung der Getter beträchtlich erhöhen. So können beispielsweise vakuumisolierte Speicherbehälter für

tiefsiedende verflüssigte Gase besser genutzt werden, da daß kostspielige Erneuern des Vakuums seltener vorgenommen werden muß.

Die Getter können in einfacher und gefahrloser Weise gehandhabt, transportiert, gelagert und eingesetzt werden. Ein weiterer Vorteil liegt in der einfachen und preiswerten Herstellung aus gut und in großen Mengen zugänglichen Hilfsstoffen. Die erfindungsgemäßen Getter können beliebig eingesetzt werden, z.B. auch in Hochvakuumsystemen der Kernforschung.

Als Hilfsstoffe eignen sich keramische Materialien aller Art, sowie oxidische und nichtoxidische Adsorbentien. Adsorbentien mit entsprechend hoher innerer Oberfläche haben den Vorteil, daß sie ihrerseits zusätzlich Gase und Dämpfe, allerdings, vorzugsweise polare, adsorbieren. Bei der Formgebung duch Mischung des Hilfsstoffes mit dem Metall werden die Teilchen kompaktiert und bilden ein Hohlraumsystem mit entsprechender Porosität. Die mittlere Porenweite der kompaktierten Formkörper kann über die Teilchengröße des Hilfsstoffes und seine Verteilung eingestellt werden, die Porosität über den Druck beim Formgebungsverfahren. Porenweite und Porosität lassen sich zusätzlich variieren, wenn poröse Hilfsstoffe eingesetzt werden.

Hilfsstoffe der genannten Art sind im Handel oder können durch Zermahlen in eine entsprechende Teilchengrößenverteilung gebracht werden. Als Formgebungsverfahren kommen die bekannten Verfahren wie Aufbaugranulation, Extrudieren, Brikettieren und Tablettieren in Frage. Entsprechend dem Agglomerationsverfahren lassen sich die Getter in eine bestimmte Form bringen, wie z.B. Kugeln, Stäbchen, Tabletten, Zylinder etc.

Es ist jedoch auch möglich, den Getter in Form einer dünnen Schicht auf einen Formling aufzubringen. Der Anteil an Metall in der Ausgangsmischung bestimmt die Beladungskapazität des Getters. Auf diese Weise wird nicht nur das pyrophore Verhalten beseitigt, sondern gleichzeitig die Verteilung des Metalls entscheidend verbessert gegenüber Formkörpern aus reinem feinteiligen Metall. Die Porosität, die Porenverteilung und die Abmessungen der geformten Getter bestimmen die Pumpgeschwindigkeit. Geringe Pumpgeschwindigkeiten werden beim Vorliegen kleiner Poren im Bereich von unter 10 nm erzielt. Höhere Pumpgeschwindigkeiten erhält man, wenn der Anteil an großen Poren mit Öffnungsweiten $D > 100$ nm zunimmt. Es ist somit möglich, eine hohe Beladungskapazität und eine geringe Sorptionsgeschwindigkeit oder eine hohe Beladungskapazität und eine hohe Sorptionsgeschwindigkeit einzustellen, d.h. den Getter auf den jeweiligen Anwendungszweck zu optimieren.

Beim Trocknen der Formlinge entweicht die Agglomerationsflüssigkeit, beispielsweise Wasser, und das Gerüst wird verfestigt. Nach dem Trocknen schließt sich eine thermische Behandlung bei höheren Temperaturen an, um das restliche Wasser zu entfernen. Wenn Wasser zurückbleibt, füllt es teilweise die Hohlräume aus und verschlechtert die Getterwirkung. Die Höhe der Temperatur und die Dauer der thermischen Behandlung hängt von der Art des Hilfsstoffs und des Metalls ab. Im allgemeinen sollen Calcinierungstemperaturen vermieden werden, bei denen der Hilfsstoff oder das Metall zusammensintern, so daß der hohe Dispersionsgrad verloren geht.

Nachfolgend einige Beispiele für Getter gemäß der Erfindung.

- 7 -

## Beispiel 1

Herstellung der Feststoffmischung für Extrudate und
Aufbaugranulate:

Zur Herstellung von Zirkon-Aluminiumoxid-Pellets bzw.
Extrudaten wurde jeweils eine Feststoffmischung aus feinpulverisiertem Zirkon (Fa. Merck) und Aluminiumoxidpulver (Fa. Condea) in einem Mischer 30 min intensiv
homogenisiert. Das Mengenverhältnis $Zr/Al_2O_3$ wurde dem
gewünschten Zr-Gehalt entsprechend gewählt.

## Beispiel 2

Herstellung von $Zr/Al_2O_3$-Extrudaten (8Gew.% Zirkon):

1 kg einer gut homogenisierten Feststoffmischung aus
8 Gew.% Zirkonpulver und 92 Gew.% Aluminiumoxid wurden
im Kneter vorgelegt.
Danach wurden 750 g. aqua dest. unter ständigem Rühren
innerhalb 20 min der Mischung zugegeben.
Die Knetmasse wurde weitere 60 min homogenisiert und
danach in einem Einschnecken-Extruder zu Strangpresslingen
verarbeitet. Die Extrudate wurden in einem Trockenschrank
bei 105° C bis zur Gewichtskonstanz getrocknet.

## Beispiel 3

Herstellung von $Zr/Al_2O_3$-Aufbaugranulaten:

Eine  homogenisierte Mischung aus Aluminiumoxid-Zirkonpulver wurde  auf einem Granulierteller mit 82 Gew.%
aqua dest. zu sphärischen Formlingen verarbeitet. Die
Trocknung der Naßpellets erfolgte im Trockenschrank bei
105° C bis zur Gewichtskonstanz.

- 8 -

Beispiel 4

43,5 Zirkon fein gepulvert wurden mit 500 g Aluminiumoxidpulver mit einem dp 50-Wert von 27 μm in einem Mischer
10 Minuten homogenisiert.

In einem Kneter wurden 280 ml 0,5 Gew.% Salpetersäure
vorgelegt. Die Pulvermischung wurde innerhalb 5 Minuten
zur Salpetersäure hinzugegeben und weitere 15 Minuten geknetet. Die entstandene Paste wurde mit einem Schneckenextruder zu zylindrischen Formlingen verarbeitet.

Die Extrudate wurden bei 105° C in einem Trockenschrank
bis zur Gewichtskonstanz getrocknet. Danach erfolgte die
Aktivierung des Getters.

Beispiel 5

Zur Änderung der Porenweite und der Porosität der Formlinge und somit der Pumpgeschwindigkeit wurden 500 g
Aluminiumoxidpulver (dp 50-Wert ≻ 65 μm) mit 43,5 g fein
gepulvertem Zirkon in einem Mischer homogenisiert. Diese
Mischung wurde zu einer 1,0%igen Salpetersäure, die in einem
Kneter vorlag, hinzugegeben und 15 Minuten geknetet. Die
so erhaltene Paste wurde in einem Extruder zu Strangpreßlingen verarbeitet und getrocknet.

Die getrockneten Getterformlinge wurden durch Behandlung
mit einer 30%igen Aluminiumoxiddiserpersion mit einer inerten Aluminiumoxidschicht überzogen und danach aktiviert.

Beispiel 6

150 g Aluminiumoxid wurden mit 350 g Zeolithpulver und
43,5 g fein gepulvertem Zirkon in einem Mischer homogenisiert. Die so erhaltene Mischung wurde mit einer 1,55%igen
Bindersäure zu einer Paste verarbeitet, extrudiert, getrocknet und aktiviert.

Die Aktivierungstemperatur betrug in allen Fällen 400°C, die Aktivierungszeit 4 Stunden.

Mit diesen erfindungsgemäßen Getterpräparationen wurden Pumpgeschwindigkeiten S zwischen $0,9 \cdot 10^{-2}$ und $7,4 \cdot 10^{-1}$ ml/s erreicht.

Generell läßt sich zu den Beispielen noch folgendes anmerken:

Die Konzentration des Zirkonpulvers ist ein Maß für die maximal mögliche Beladungskapazität von Zirkon-Aluminiumoxid-Formlingen. Diese Beladungskapazität ist bei hochporösen Formkörpern unabhängig von der Geometrie der Formlinge und dem verwendeten Aluminiumoxid.

Die Geometrie der Formlinge beeinflußt die Sorptionsgeschwindigkeit S. Eine Zunahme der Oberflächen-Volumen-Verhältnisse (bei gleicher Zirkonkonzentration und gleichem Aluminiumoxid) erhöht die Sorptionsgeschwindigkeit S.

Mit Aluminiumoxiden unterschiedlicher Teilchengrößenverteilung läßt sich die Porosität der Formlinge und ihr Porenspektrum verändern. Höhere Porosität und weite Poren (Zuleitungsporen) erhöhen den Wert der Sorptionsgeschwindigkeit S.

Geometrie und Teilchengrößenverteilung des Aluminiumoxides verändern nicht die maximal mögliche Beladungskapazität der Zirkon-Aluminiumoxid-Getter. Sie beeinflussen nur die Sorptionsgeschwindigkeit S und damit die pro Zeit durch Sorption entstehende Wärmemenge, die an das Aluminiumoxidgerüst weitergeleitet wird.

Ba/Hi

15.03.1982

Patentansprüche

1. Getter aus aktiven, feindispersen Metallen,
   dadurch gekennzeichnet,
   daß die Metalle mit festen, feinteiligen Hilfsstoffen
   gemischt sind.

2. Getter nach Anspruch 1,
   dadurch gekennzeichnet,
   daß die Hilfsstoffe keramische Materialien oder Adsorbentien mit Teilchengrößen von 0,1 bis 100 µm,
   vorzugsweise 10 bis 60 µm sind.

3. Getter nach Anspruch 1 oder 2,
   gekennzeichnet durch einen Metallgehalt von 1 bis
   40 Gew.%.

4. Getter nach Anspruch 1 oder 2,
   gekennzeichnet durch einen Metallgehalt von 5 bis 10
   Gew.%.

5. Herstellung von Gettern nach einem der Ansprüche
   1 bis 4,
   dadurch gekennzeichnet,
   daß das Gemisch aus Metall und Hilfsstoff durch
   Agglomeration geformt und durch thermische Behandlung
   verfestigt und aktiviert wird.

Ba/Hi
15.03.1982
EM 1032